# EUROPÄISCHE PATENTSCHRIFT

(11) **EP 3 218 139 B1**
(45) Veröffentlichungstag und Bekanntmachung des Hinweises auf die Patenterteilung: **17.07.2019**
(21) Anmeldenummer: 15805120.1
(22) Anmeldetag: 12.11.2015
(51) Int. Cl.: B23K 20/12, B23K 9/073, B23K 9/08, B23K 9/10, H05H 1/40

(54) **PRESSSCHWEISSVORRICHTUNG UND PRESSSCHWEISSVERFAHREN**
PRESSURE WELDING DEVICE AND PRESSURE WELDING METHOD
DISPOSITIF ET PROCÉDÉ DE SOUDAGE PAR PRESSION

(30) Priorität: 12.11.2014 DE 202014105437 U
(43) Veröffentlichungstag der Anmeldung: 20.09.2017
(73) Patentinhaber: KUKA Deutschland GmbH, 86165 Augsburg (DE)
(72) Erfinder: BÜCHLER, Michael, 86179 Augsburg (DE); FISCHER, Otmar, 86150 Augsburg (DE); MEYER, Harald, 86199 Augsburg (DE); SCHNEIDER, Klaus, 86316 Friedberg (DE)
(74) Vertreter: Ernicke, Klaus Stefan
(86) Internationale Anmeldenummer: PCT/EP2015/076438
(87) Internationale Veröffentlichungsnummer: WO 2016/075238

(56) Entgegenhaltungen:
- DE-A1- 2 647 735
- DE-U1- 29 606 504
- DE-U1-202004 010 386
- GB-A- 1 097 233

## Beschreibung

Die Erfindung betrifft eine Pressschweißvorrichtung und ein Pressschweißverfahren.

Die GB 1 097 233 A1 zeigt eine Reibschweißvorrichtung mit einer Reibeinrichtung, einer hydraulischen Staucheinrichtung und Bauteilaufnahmen für die zu verschweißenden Bauteile sowie parallelen Führungs- und Kolbenstangen, an denen zwei Maschinenköpfe mit jeweils einer Bauteilaufnahme und einem eigenen hydraulischen Stauchzylinder verfahrbar gelagert sind. Zwischen den Maschinenköpfen ist ein zentraler stationärer Querkopf mit beidseitigen Endanschlägen zur Abstützung der in den Bauteilaufnahmen und deren Spannfuttern gehaltenen Bauteile angeordnet. Die Reibschweißvorrichtung ist als doppelte Einkopfmaschine ausgebildet und kann nur in dieser Ausbildung und Funktion betrieben werden. Bei anderen Varianten der Reibschweißvorrichtung sind jeweils mehrere, dezentrale Querköpfe vorhanden.

Die DE 26 47 735 A offenbart eine Doppelkopf-Reibschweißmaschine mit beidseitigen Maschinenköpfen und einem dazwischen angeordneten Bock, bei einem dreiteiligen Werkstück das mittlere Teil Form eines Achsgehäuses hält und dazu in die Gehäuseöffnung greift.

Eine andere Pressschweißvorrichtung ist aus der EP 0 246 239 A bekannt. Sie weist eine Reibeinrichtung zur Plastifizierung und eine Staucheinrichtung sowie Bauteilaufnahmen für die zu verschweißenden Bauteile sowie ein Maschinengestell auf, an dem zwei Maschinenköpfe mit jeweils einer Bauteilaufnahme verfahrbar gelagert und mit eigenen Stauchantrieben wirkverbunden sind. Die Reibschweißvorrichtung ist als Doppelkopfmaschine ausgebildet, bei der die Maschinenköpfe und ihre Stauchantriebe gemeinsam gesteuert sind, wobei zwischen den Maschinenköpfen eine stationäre zentrale Bauteilaufnahme für das zentrale dritte Bauteil angeordnet ist. Die Stauchantriebe sind an der Außen- oder Rückseite der Maschinenköpfe angeordnet und wirken auf Druck.

Es ist Aufgabe der vorliegenden Erfindung, eine verbesserte Pressschweißtechnik aufzuzeigen.

Die Erfindung löst diese Aufgabe mit den Merkmalen in den den selbstständigen Ansprüchen.
Die beanspruchte Pressschweißtechnik, d.h. die Pressschweißvorrichtung und das Pressschweißverfahren, haben verschiedene Vorteile. Sie bieten einerseits eine Steigerung der Leistungsfähigkeit und der Prozessqualität beim Pressschweißen. Andererseits kann der Automatisierungsgrad und damit auch die Wirtschaftlichkeit verbessert werden. Rüst- und Stillstandszeiten können weitgehend vermieden oder zumindest reduziert werden. Zudem wird die Ergonomie verbessert.

Die beanspruchte Pressschweißtechnik ist sehr vielseitig und bietet unterschiedlichste Einsatzmöglichkeiten. Diese können hinsichtlich der Bauteile und der Prozesse in weiten Grenzen variieren. Wahlweise sind ein Einzelbetrieb oder ein Parallelbetrieb von Pressschweißprozessen möglich. Ein Parallelbetrieb wirkt sich besonders leistungssteigernd aus. Er kann mit manueller oder automatischer Be- und Entladung durchgeführt werden.

Die eigenständige Steuerung der Maschinenköpfe und ihrer Stauchantriebe bietet eine große Variantenbreite für verschiedene Betriebsmodi der Pressschweißtechnik. Ein Betrieb der Pressschweißvorrichtung ist wahlweise als doppelte Einkopfmaschine oder als Doppelkopfmaschine möglich. Zudem ist ein Einkopfbetrieb möglich. Hierbei können bedarfsweise ein einzelner Pressschweißprozess für ein einzelnes Schweißteil oder mehrere separate Pressschweißprozesse parallel und dabei zeitgleich oder zeitversetzt zur Bildung von zwei oder mehr Schweißteilen durchgeführt werden.

Für die Pressschweißvorrichtung können weitere vorteilhafte Ergänzungen durch Zusatzkomponenten vorgenommen werden.

Eine Bearbeitungseinrichtung erlaubt eine Nachbearbeitung des Schweißteils in Aufnahme- oder Spannstellung an der Pressschweißvorrichtung. Eine Bearbeitung erfolgt zum Beispiel an der oder den Schweißstellen, wobei der dortige ringförmige Schweißwulst entfernt wird. Dies ist effektiv und spart Zeit, zusätzlichen Aufwand und Kosten.

Die Schweißstelle befindet sich häufig in unmittelbarer Nähe des Maschinenkopfes und der dortigen Bauteilaufnahme, was zu Platzproblemen führen kann. Die beanspruchte Stelleinrichtung erlaubt eine Abstandsbildung zwischen dem Maschinenkopf und der zugeordneten weiteren Bauteilaufnahme, wodurch ausreichend Platz für die Bearbeitung und eine gute Zugänglichkeit zur Bearbeitungsstelle, insbesondere zur Schweißstelle, geschaffen wird.

Die beanspruchte Stelleinrichtung erlaubt außerdem eine einfache und schnelle Anpassung der Pressschweißvorrichtung an unterschiedliche Bauteilmaße, insbesondere Bauteillängen. Zudem können Einlege- oder Bauteiltoleranzen sowie etwaig im Schweißprozess auftretende elastische Bauteilverkürzungen kompensiert werden. Dies kann automatisch erfolgen.

Mit der Stelleinrichtung wird auch eine Optimierung des Pressschweißprozesses und eine optimale Kontaktierung der zu verschweißenden Bauteile und des Stauchkopfes erreicht. Dies ist auch für die Optimierung der Prozessabläufe, insbesondere eine programmierte Steuerung der Plastifizierungs- und Stauchphasen sowie der dabei eintretenden Vorschübe und Bauteilverkürzungen von Vorteil. Dadurch können Schweißteile mit sehr hoher Qualität hergestellt werden. Dies betrifft einerseits die Qualität der Schweißverbindung und andererseits die gleichbleibende Länge der Schweißteile.

Ferner kann im Antriebsstrang zwischen Spindelantrieb und Spindel eine Betätigungseinrichtung für eine Spanneinrichtung an der Bauteilaufnahme des Maschinenstocks bzw. Spindelstocks angeordnet sein. Hierbei kann das Antriebsmoment über das Antriebsgehäuse eines Betätigungsantriebs weitestgehend verformungsfrei übertragen werden. Somit lassen sich auch sehr hohe Momente in Verbindung mit einer Spannvorrichtungsbetätigung übertragen. Andererseits ist hierdurch ein Direktantrieb möglich, bei dem der Antriebsmotor mit seiner Motorachse im wesentlichen fluchtend mit der Spindelachse ausgerichtet werden kann. Durch die Trennung der Betätigungseinrichtung vom Antriebsmotor kann dieser in beliebiger Weise ausgebildet sein. Dies ermöglicht den Einsatz von kostengünstigen Standardmotoren. Außerdem ist ein Direktantrieb für verfahrbare Maschinenköpfe besonders günstig.

Der Direktantrieb spart das in vielen Fällen bisher übliche Vorgelege mit einem Riementrieb ein. Die Einleitung von Querkräften auf den Antriebsstrang kann vermieden werden. Die Verschleißanfälligkeit wird deutlich gemindert.

Außerdem können im Antriebsstrang weitere Komponenten untergebracht werden, z.B. eine Lammellenbremse und eine Drehkupplung zum Ausgleich von Fluchtungsfehlern. Zudem kann eine Massenentkopplung zwischen dem Spindelantrieb und einem im Prozess axial vorgeschobenen Maschinenkopf implementiert werden.

Ferner ist es möglich, den Antriebsmotor mit einer Schwungscheibenanordnung zu kombinieren, die vom Maschinenkopf aus gesehen hinter dem Antriebsmotor sitzen kann. Der Spindelantrieb kann zudem wahlweise stationär oder schwimmend bzw. in Richtung der Maschinenachse verfahrbar am Maschinengestell angeordnet sein. Durch die beanspruchte Betätigungseinrichtung ergibt sich eine wesentlich größere Bandbreite und Gestaltungsfreiheit für den Spindelantrieb. Dies ermöglicht außerdem eine Anpassung an unterschiedliche Maschinen- und Betriebs- oder Prozesserfordernisse.

Die Pressschweißvorrichtung kann in unterschiedlicher Weise ausgebildet sein. Sie kann z.B. als Reibschweißvorrichtung ausgeführt sein. Die Bauteile werden dabei vorzugsweise längs der Maschinenachse ausgerichtet und an ihren einander zugekehrten Stirnrändern durch Reiben plastifiziert und durch anschließendes axiales Stauchen miteinander verbunden. Alternativ ist ein Pressschweißen mit einem umlaufend bewegten Lichtbogen möglich. Der Lichtbogenumlauf kann hierbei durch eine Treibeinrichtung gesteuert werden. Eine solche Pressschweißvorrichtung kann ebenfalls eine drehbare Bauteilaufnahme am Maschinenkopf aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Pressschweißvorrichtung in einer perspektivischen Seitenansicht,
- Figur 2:: die Pressschweißvorrichtung von Figur 1 in einer anderen perspektivischen Seitenansicht,
- Figur 3:: eine Stirnansicht der Pressschweißvorrichtung gemäß Pfeil III von Figur 2,
- Figur 4:: einen Längsschnitt durch die Pressschweißvorrichtung gemäß Schnittlinie IV - IV von von Figur 3
- Figur 5:: eine vergrößerte Darstellung des Details V von Figur 4,
- Figur 6 und 7:: eine Variante der Pressschweißvorrichtung von Figur 1 bis 5 in perspektivischen Seitenansichten und
- Figur 8:: eine weitere Variante der Pressschweißvorrichtung von Figur 1 bis 5.

Die Erfindung betrifft eine Pressschweißvorrichtung (1) und ein Pressschweißverfahren.

Die Pressschweißvorrichtung (1) und das Pressschweißverfahren können unterschiedlich ausgebildet sein. Gemeinsam ist den verschiedenen Varianten eine Plastifizierungseinrichtung (7) und eine Staucheinrichtung (8), mit der die zu verschweißenden Bauteile (2,3,3',4) an den einander zugekehrten Seiten oder Rändern aufgeschmolzen oder erweicht und anschließend unter Bildung eines Schweißteils (5,5') gestaucht werden. Die Staucheinrichtung (8) weist hierfür einen Stauchantrieb (22) auf, der die Bauteile (2,3,3',4) relativ zueinander bewegt.

Die Pressschweißvorrichtung (1) weist ferner eine Maschinen- und Prozesssteuerung (nicht dargestellt) auf, die mit den nachfolgend beschriebenen Maschinenkomponenten verbunden ist und diese steuert. Die Maschinen- und Prozesssteuerung ist außerdem mit den nachgenannten Erfassungs-, Detektions- oder Messeinrichtungen verbunden und verarbeitet deren Signale. Sie kann speicherprogrammierbar ausgebildet sein und ein oder mehrere Prozess- oder Ablaufprogramme, eine Technologiedatenbank, Datenspeicher für Programme und aufgenommene Prozessdaten, eine Qualitätsüberwachung nebst Protokollierung oder dgl. beinhalten.

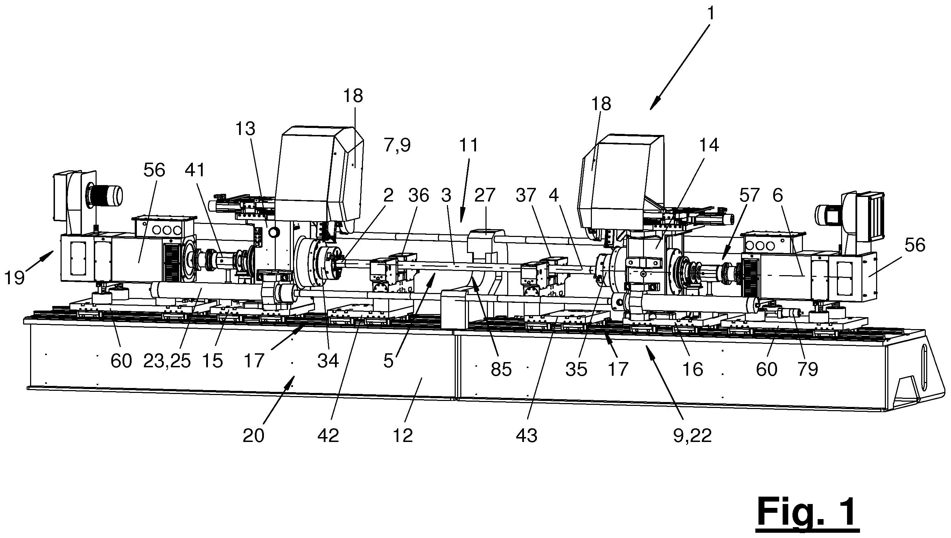

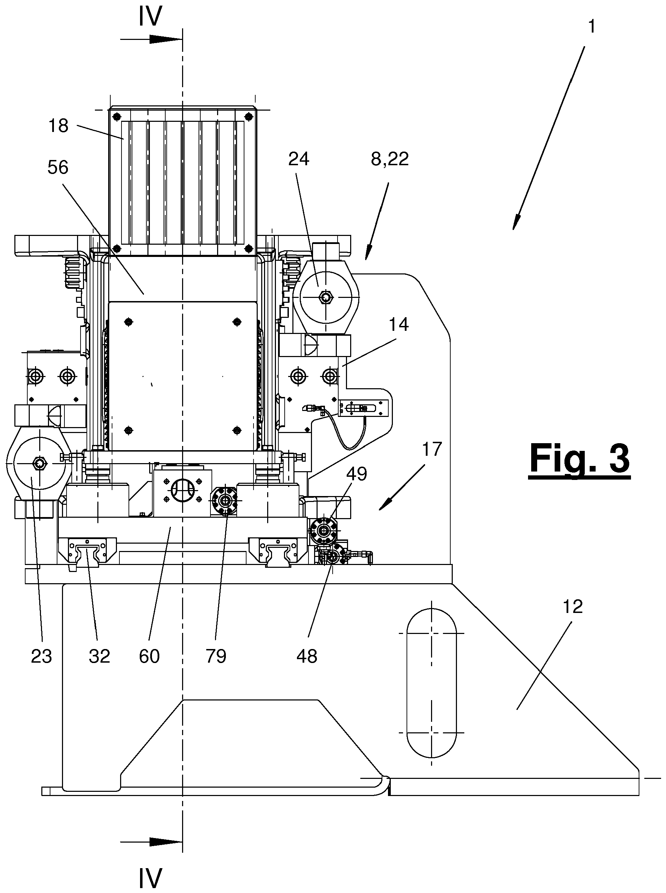

Die Plastifizierungseinrichtung (7) und das Plastifizierungsverfahren können unterschiedlich ausgebildet sein. Bei den in Figur 1 bis 7 gezeigten Ausführungsformen ist die Pressschweißvorrichtung (1) als Reibschweißvorrichtung ausgebildet, wobei die Plastifizierungseinrichtung (7) eine Reibeinrichtung (9) aufweist.

In einer nicht dargestellten Variante kann die Plastifizierungseinrichtung (7) eine Lichtbogeneinrichtung aufweisen, welche die Bauteilränder mit einem Lichtbogen erwärmt und angeschmilzt, wobei der Lichtbogen mittels einer Treibeinrichtung entlang des Bauteilumfangs umlaufend mit Magnetkraft bewegt wird.

Die Pressschweißvorrichtung (1) weist in den verschiedenen Varianten jeweils ein Maschinengestell (12) mit einer Längs- oder Maschinenachse (6) und eine Halterung (11) mit Bauteilaufnahmen (34,35,36,37) für die zu verschweißenden Bauteile (2,3,3',4) auf. Das Maschinengestell (12) hat ein flurgebundenes Maschinenbett, auf dem die nachfolgend erläuterten Komponenten der Pressschweißvorrichtung (1) angeordnet sind. Ferner ist eine Betriebsmittelversorgung (19) vorhanden. Sie stellt die benötigten Betriebsmittel, insbesondere elektrischen Strom, Hydraulikflüssigkeit, Druckluft, Schmier- und Kühlmittel oder dgl. zur Verfügung und leitet sie zu den jeweiligen Verbrauchern.

Die Pressschweißvorrichtung (1) hat ein umgebendes schützendes Gehäuse mit einem verschließbaren Zugang an der Bedienseite (20). Hier kann ein Werker oder ein Roboter die zu fügenden Bauteile (2,3,3',4) zuführen und das fertige Schweißteil (5,5') abführen.

Das Pressschweißen der Bauteile (2,3,3',4) erfolgt in Richtung der Maschinenachse (6), entlang der auch die Bauteile (2,3,3',4) ausgerichtet sind. Die Bauteile (2,3,3',4) werden dabei an den einander zugekehrten Stirnseiten oder Rändern plastifiziert und entlang der Maschinenachse (6) gestaucht. Die Maschinenachse (6) bildet die Prozessachse für das Plastifizieren und Stauchen.

Beim Reibschweißen werden die Bauteile (2,3,3',4) vom Stauchantrieb (22) unter einer steuerbaren oder regelbaren Kraft axial zusammengepresst, wobei das in der Bauteilaufnahme (34) gehaltene Bauteil (2,4) um die Maschinenachse (6) gedreht wird. Durch die Reibungswärme an der Verbindungsstelle werden die Bauteilränder erhitzt, wobei sie glühen und teigig werden. Anschließend erfolgt durch den Stauchantrieb (22) der Stauchhub mit Krafterhöhung. Beim Reiben und Stauchen findet eine Bauteilverkürzung und die Bildung eines Reibwulstes an der Verbindungsstelle der Bauteile (2,3,3',4) statt.

Beim Schweißen mit einem magnetisch bewegten Lichtbogen werden die Bauteile (2,3,3',4) unter Anlegen einer elektrischen Spannung in Kontakt gebracht und anschließend wieder axial distanziert, wobei zwischen den Bauteilen (2,3,3',4) ein Lichtbogen gezündet wird, welcher die Bauteilränder erwärmt und anschmilzt. Der Lichtbogen wird dabei mittels einer Treibeinrichtung entlang des Bauteilumfangs umlaufend mit Magnetkraft bewegt. Anschließend erfolgt wiederum durch den Stauchantrieb (22) der Stauchhub zur Kontaktierung und Verbindung der Bauteile (2,3,3',4).

Die Bauteile (2,3,3',4) können aus unterschiedlichen Werkstoffen bestehen. Sie können zum Schweißen mit einem magnetisch bewegten Lichtbogen elektrisch leitend sein. Vorzugsweise kommen metallische Werkstoffe, insbesondere Stahl, Leichtmetalllegierungen, Gusslegierungen oder dergleichen zum Einsatz. Die Werkstoffpaarungen können unterschiedlich sein. Hierbei können insbesondere eisenhaltige Werkstoffe mit Nichteisenmetallen gefügt werden. Außerdem können nichtmetallische Werkstoffe, z.B. Keramikwerkstoffe geschweißt werden, insbesondere in Verbindung mit einem anderen metallischen Bauteil.

In den verschiedenen Varianten weist die Pressschweißvorrichtung (1) jeweils mehrere, insbesondere zwei Maschinenköpfe (13,14) mit jeweils einer ggf. drehbaren Bauteilaufnahme (34,35) auf, die beweglich am Maschinengestell (12) angeordnet sind. Bei den Varianten von Figur 1 bis 7 sind jeweils zwei Maschinenköpfe (13,14) einander an der gemeinsamen Maschinenachse (6) gegenüberliegend am Maschinengestell (12) angeordnet.

In anderen Varianten kann die Maschinenkopfzahl auch größer als zwei sein, z.B. bei einer Parallel- oder Mehrfachanordnung von Maschinenkopf-Paarungen. Die Maschinenköpfe (13,14) sind bevorzugt gleichartig ausgebildet, können alternativ aber auch unterschiedlich sein.

Die Reibeinrichtung (9) und die nicht dargestellte Lichtbogeneinrichtung sind jeweils den Maschinenköpfen (13,14) zugeordnet. Die Reibeinrichtung (9) und die zugehörige Maschinenkopfausbildung sind nachfolgend näher erläutert. Für die Lichtbogeneinrichtung ist den Maschinenköpfen (13,14) jeweils eine Stromquelle und eine Treibeinrichtung für den Lichtbogen zugeordnet. Die nachfolgend beschriebene Ausbildung der Maschinenköpfe (13,14) kann ansonsten für beide Varianten der Plastifizierungseinrichtung (7) eingesetzt werden.

Die Maschinenköpfe (13,14) sind jeweils beweglich, insbesondere axial verfahrbar gegenüber dem Maschinengestell (12), insbesondere dessen Maschinenbett, gelagert. Sie sind hierfür z.B. auf einem Träger (15,16) angeordnet, der mittels einer längs der Maschinenachse (6) ausgerichteten Führung (32) am Maschinenbett verfahrbar geführt und abgestützt ist. Der Maschinenkopf (13,14) kann eine Erfassungseinrichtung für Weg und/oder Position aufweisen.

Der Maschinenkopf (13,14) wird jeweils vom Stauchantrieb (22) bewegt. In den gezeigten Ausführungsbeispielen von Figur 1 bis 7 ist jedem Maschinenkopf (13,14) ein eigener Stauchantrieb (22) zugeordnet. Dieser kann sich jeweils an einem zentralen und am Maschinengestell (12) stationär angeordneten Stauchkopf oder Stützkopf (27) abstützen. In der bevorzugten und nachfolgend näher erläuterten Ausführungsform entwickelt der Stauchantrieb (22) Zugkräfte.

Die Halterung (11) für die Bauteile (2,3,3',4) weist außer der Bauteilaufnahme (34,35) am jeweiligen Maschinenkopf (13,14) eine weitere Bauteilaufnahme (36,37) auf, die zwischen dem Maschinenkopf (13,14) und dem Stauch- oder Stützkopf (27) am Maschinengestell (12) beweglich angeordnet ist. Vorzugsweise ist die weitere oder zentrale Bauteilaufnahme (36,37) längs der Maschinenachse (6) verfahrbar gelagert. Hierfür kann die jeweilige Bauteilaufnahme (36,37) z.B. einen Träger (42,43), insbesondere einen Schlitten aufweisen, der ebenfalls auf der Führung (32) längs verfahrbar gelagert ist. In den gezeigten Ausführungsbeispielen sind zwei weitere oder zentrale Bauteilaufnahme (36,37) vorhanden. Ihre Zahl kann auch höher als zwei sein. Die weiteren Bauteilaufnahmen (36,37) können ebenfalls eine Erfassungseinrichtung für Weg und/oder Position aufweisen.

Die Maschinenköpfe (13,14) mit ihrer Reibeinrichtung (9) oder Lichtbogeneinheit und ihre Stauchantriebe (22) sind eigenständig und unabhängig voneinander steuerbar. Dies ermöglicht in Verbindung mit einem entsprechend anpassbaren zentralen Stauch- oder Stützkopf (27) verschiedene Betriebsmodi der Pressschweißvorrichtung (1). Diese kann als doppelte Einkopfmaschine oder wahlweise auch als Doppelkopfmaschine betrieben werden. Beim Betrieb als doppelte Einkopfmaschine können mit den unabhängig voneinander agierenden Maschinenköpfen (13,14) und ihren Stauchantrieben (22) zwei oder mehr separate Pressschweißprozesse zeitgleich zur Bildung von zwei oder mehr Schweißteilen (5') durchgeführt werden. Beim Betrieb als Doppelkopfmaschine wirken die Maschinenköpfe (13,14) und ihre Stauchantriebe (22) zusammen zur gemeinsamen Bildung eines Schweißteils (5).

Die eigenständig verfahrbaren Maschinenköpfe (13,14) können in den gezeigten Paarungen gemeinsam oder unabhängig voneinander bewegt werden. Sie führen beim Pressschweißprozess gegeneinander gerichtete Vorschub- oder Fahrbewegung aus. Eine gemeinsame Bewegung kann gleichzeitig und in gegenseitiger Abstimmung erfolgen. Ferner ist es möglich, dass sich beide Maschinenköpfe (13,14) gleichzeitig, aber unabhängig voneinander bewegen. Außerdem kann sich ggf. nur ein Maschinenkopf (13,14) bewegen, wobei der andere Maschinenkopf (14,13) steht. Diese verschiedenen Kinematiken der Maschinenköpfe (13,14) ermöglichen die Durchführung unterschiedlicher Pressschweißprozesse und einen Einzel- oder Parallelbetrieb.

Die Stauchantriebe (22) der Maschinenköpfe (13,14) können gemeinsam und ggf. in gegenseitiger Abstimmung oder alternativ unabhängig voneinander gesteuert und geregelt werden. Die Pressschweißvorrichtung (1) kann eine Detektionseinrichtung, insbesondere Sensoren, zur Erfassung der Maschinenkopf- und/oder Antriebsbewegungen aufweisen. Hierbei können z.B. Weg, Geschwindigkeit und Beschleunigung sowie ggf. weitere prozessrelevante Parameter, z.B. Kräfte, Drücke oder Momente, erfasst werden. Auch ein Kontakt oder ein axialer Abstand können detektiert werden. Die Stauchantriebe (22) und die Detektionseinrichtung können mit der Maschinensteuerung signal- und steuertechnisch verbunden sein.

Figur 1 bis 5 zeigen eine erste Betriebsvariante der Pressschweißvorrichtung (1) als Doppelkopfmaschine, in der zwei äußere Bauteile (2,4) bevorzugt gleichzeitig an die Enden eines zentralen Bauteils (3) geschweißt werden. Hierdurch entsteht ein dreiteiliges Schweißteil (5). Die an den Enden des Maschinengestells (12) befindlichen Maschinenköpfe (13,14) werden dazu gleichzeitig aufeinander zu bewegt. Das zentrale Bauteil (3) kann sich durch den Stauch- oder Stützkopf (27) erstrecken.

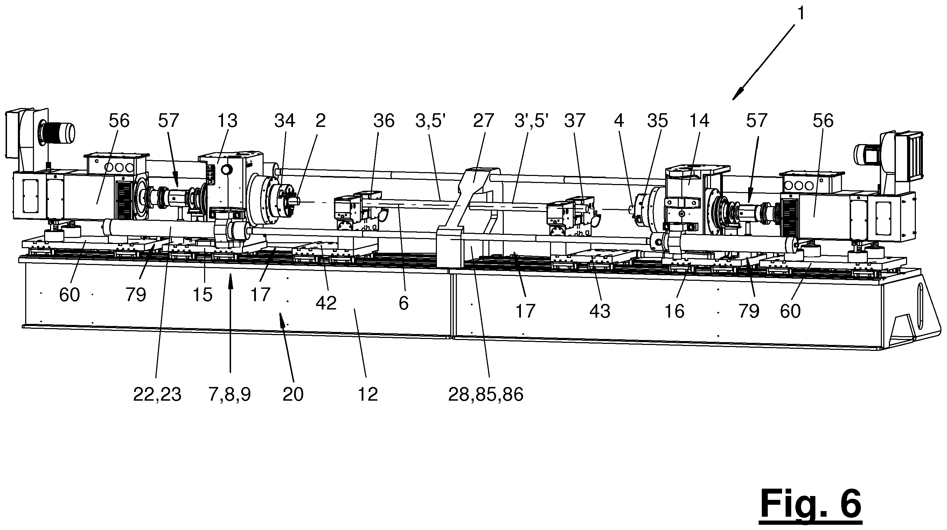

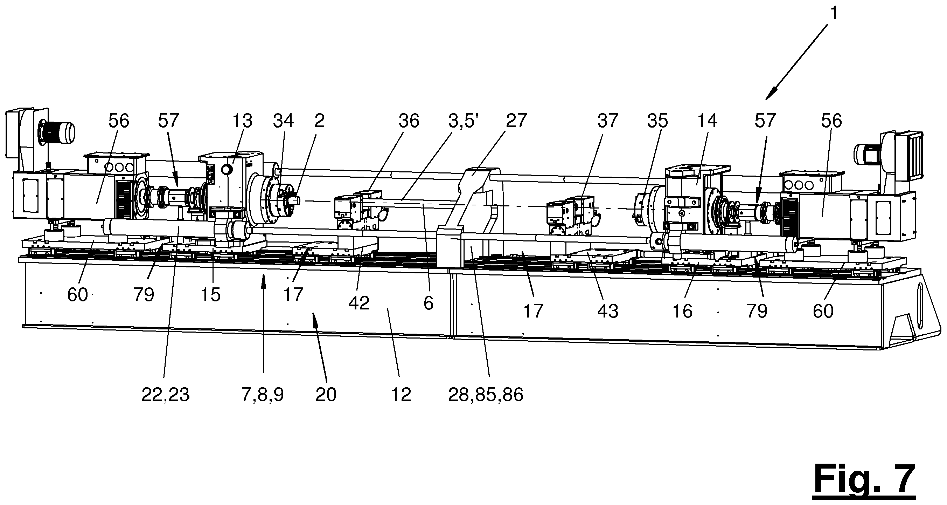

In Figur 6 und 7 ist eine zweite Betriebsvariante der Pressschweißvorrichtung (1) als doppelte Einkopfmaschine dargestellt. In Figur 6 werden endseitige Bauteile (2,4) jeweils an ein zugeordnetes Bauteil (3,3') geschweißt, wobei zwei jeweils zweiteilige Schweißteile (5') entstehen. Figur 7 zeigt die Variante, bei der momentan nur auf einer Maschinenseite ein Pressschweißprozess stattfindet und ein endseitiges Bauteil (2) an ein zugeordnetes Bauteil (3) geschweißt wird, wobei ein zweiteiliges Schweißteil (5') gebildet wird.

Die Pressschweißvorrichtung (1) kann als einheitliche Integralmaschine mit zwei beidseits des Stauch- oder Stützkopf (27) angeordneten Maschinen- und Prozessbereichen ausgebildet sein. Sie kann alternativ als Kombimaschine ausgebildet sein und aus zwei spiegelbildlich bzw. mittensymmetrisch angeordneten Einkopfmaschinen mit jeweils einem einzelnen endseitigen Maschinenkopf (13,14) nebst eigenem Stauchantrieb (22) und eigenem Einzelgestell bestehen. Die Einzelgestelle können zu einem gemeinsamen Maschinengestell (12) verbundenen sein. An der Mitte bzw. Stoßstelle der Einkopfmaschinen ist ein bevorzugt gemeinsamer stationärer Stauchkopf (27) angeordnet und am Maschinengestell (12) abgestützt. Er kann alternativ mehrfach vorhanden sein.

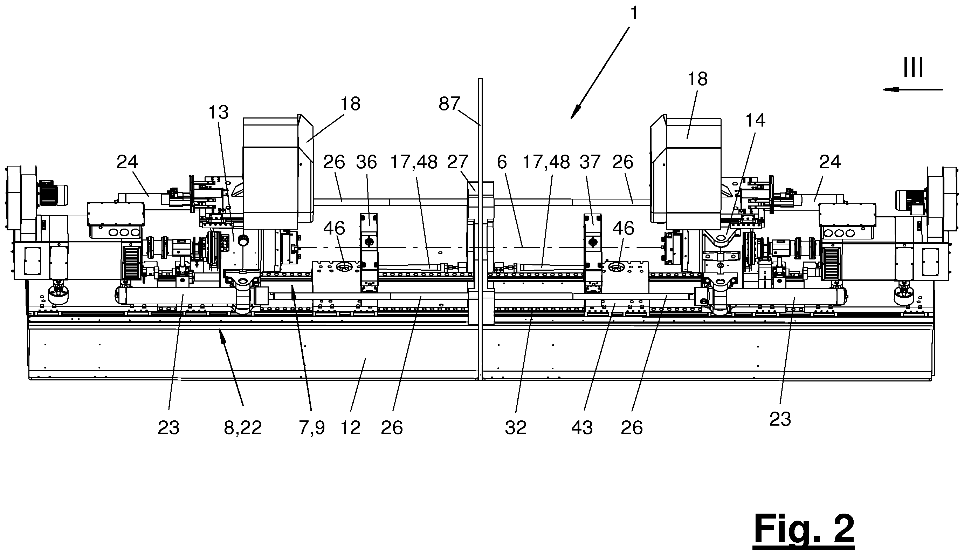

Die Einkopfmaschinen oder die Maschinen- und Prozessbereiche der Integralmaschine können gleichartig oder unterschiedlich ausgebildet sein. Sie können gemeinsam oder unabhängig voneinander betrieben werden. Am Stauchkopf (27) zwischen den Einkopfmaschinen bzw. den beidseitigen Maschinen- und Prozessbereichen kann ein in Figur 2 angedeutetes Schott (87) zur Trennung der Arbeitsbereiche angeordnet sein. Bei der Pressschweißvorrichtung (1) ist dadurch ein Parallelbetrieb an den beiden Einkopfmaschinen bzw. Maschinen- und Prozessbereichen möglich. Zudem kann ein Einzelbetrieb bei Nutzung von nur einer der Einkopfmaschinen durchgeführt werden.

Die Einkopfmaschinen können für andere Einsatzzwecke als eigenständige Einzelmaschinen benutzt werden. Hierdurch können ein Baukastensystem gebildet und höhere Stückzahlen erreicht werden.

Der stationäre Stauchkopf (27) weist beidseits einen festen oder lösbaren Stauchanschlag (28) für die Bauteile (3,3') an den Bauteilaufnahmen (36,37) auf. Der Stauchanschlag kann eine Aufnahme für eine einsetzbare Stauchstange aufweisen. Die Stauchanschläge (28) sind für den Betrieb der Pressschweißvorrichtung (1) als doppelte Einkopfmaschine bzw. für den besagten Parallelbetrieb vorgesehen. Für den Betrieb als Doppelkopfmaschine können die Stauchanschläge (28) entfernt oder deaktiviert werden, um Platz für das zentrale Bauteil (3) zu schaffen. Dies kann durch Umrüstung oder Austausch des Stauchkopfs (27) erfolgen.

Bei der Pressschweißvorrichtung (1) von Figur 1 bis 7 ist der umrüstbare Stauch- oder Stützkopf (27) rahmen- oder bügelförmig ausgebildet. Er weist einen zentralen Durchlass (85) mit einem darin lösbar angeordneten Einsatz (86) mit den beidseitigen Stauchanschlägen (28) auf. Die Anordnung und lösbare Befestigung der Stauchanschläge (28) kann auch auf andere Weise konstruktiv ausgebildet sein.

Beim Betrieb als doppelte Einkopfmaschine gemäß Figur 6 und 7 ist der Einsatz (86) mit den Stauchanschlägen (28) montiert. Für den Betrieb als Doppelkopfmaschine ist der Einsatz (86) entfernt und der zentrale Durchlass (85) für das zentrale Werkstück (3) offen. Somit kann die Pressschweißvorrichtung (1) in einer Mehrfachfunktion wahlweise als Doppelkopfmaschine oder doppelte Einkopfmaschine betrieben werden.

Die Schweißprozesse an den Einkopfmaschinen bzw. den beidseitigen Maschinen- und Prozessbereichen können in zeitlicher und kräftemäßiger Abstimmung ablaufen. Figur 6 zeigt diese Ausführung. Die beidseitigen Stauchkräfte können sich am Stauchkopf neutralisieren. Ein solcher Synchronbetrieb bietet sich bei gleichartigen Bauteilen (2,3 und 4,3') an.

In einer Abwandlung können die beiden Schweißprozesse unabhängig voneinander ablaufen. Dies kann ein Parallelbetrieb mit ungleichartigen Bauteilen (2,3,4,3') sein. Ferner kann ggf. nur auf einer Seite der Pressschweißvorrichtung (1) bzw. an einer der beiden Einkopfmaschinen ein Schweißbetrieb ablaufen. Figur 7 zeigt diese Variante.

Die weitere oder zentrale Bauteilaufnahme (36,37) kann mittels einer steuerbaren Fixiereinrichtung (46) bedarfsweise am Maschinenbett (12), insbesondere an der Führung (32) durch Klemmung oder auf andere Weise fixiert werden. Die Fixiereinrichtung (46) weist z.B. eine federnd vorgespannte Klemmung gegen die Führung (32) auf, die hydraulisch gelöst werden kann. Sie kann z.B. eine zusätzliche Positionssicherung bilden, die bei ausgeschalteter Maschine (frei von Spannungen und Drücken) ein Wegwandern der Bauteilaufnahme (36,37) verhindert. Die Fixiereinrichtung (46) kann alternativ entfallen.

Bei der in Figur 1 bis 5 gezeigten ersten Variante sind zwei solche zentrale Bauteilaufnahmen (36,37) zwischen den endseitigen Maschinenköpfen (13,14) angeordnet und nehmen gemeinsam ein zentrales und somit drittes Bauteil (3) auf. Bei der in Figur 6 und 7 gezeigten zweiten Variante ist jedem Maschinenkopf (13,14) jeweils eine weitere oder zentrale Bauteilaufnahme (36,37) zugeordnet, die ein einzelnes weiteres Bauteil (3,3') aufnimmt.

Die Bauteilaufnahmen (34,35,36,37) können das jeweilige Bauteil (2,3,3',4) in beliebig geeigneter Weise aufnehmen. Vorzugsweise besitzen sie hierfür jeweils eine fernsteuerbare Spanneinrichtung (39) mit verstellbaren Spannelementen (40) und eine Betätigungseinrichtung (41). Die Spanneinrichtung (39) kann als Spannfutter, ggf. in ein- oder mehrstufiger Ausführung, oder als Zentrumsspanner oder in anderer Weise ausgebildet sein.

Die Staucheinrichtungen (8) wirken in den gezeigten Ausführungsbeispielen jeweils zwischen den Maschinenköpfen (13,14) und dem bevorzugt zentralen Stauch- oder Stützkopf (27). Die Staucheinrichtung (8) entwickelt dabei Zugkräfte in Richtung der Maschinenachse (6). Sie weist einen Stauchantrieb (22) auf, der zwischen dem Maschinenkopf (13,14) und dem Stauch- bzw. Stützkopf (27) angeordnet und mit beiden verbunden ist. Der Stauchantrieb (22) wirkt auf Zug und zieht die Komponenten (13,14,27) gegeneinander.

Der Stauchantrieb (22) kann in unterschiedlicher Weise ausgebildet sein. In den gezeigten Ausführungsbeispielen weist er zwei oder mehr parallele Antriebseinheiten (23,24) auf, die längs der Maschinenachse (6) ausgerichtet sind. Die Antriebseinheiten (23,24) sind an verschiedenen Seiten der Maschinenachse (6) angeordnet, insbesondere beidseits und einander diametral zur Maschinenachse (6) gegenüberliegend. Die Antriebseinheiten sind bevorzugt als Zylinder ausgebildet.

Die Antriebseinheiten (23,24) können alternativ in anderer Weise, z.B. als elektrische Stangen- oder Spindelantriebe, ausgebildet sein. Die nachfolgend zu den gezeigten Zylindern (23,24) erläuterten Anordnungen und Ausgestaltungen gelten entsprechend auch für andere Ausführungen von Antriebseinheiten.

Die Zylinder (23,24) sind auf unterschiedlichen Höhen über dem Maschinenbett (12) angeordnet. Der dem Bedienbereich bzw. der Bedienseite (20) benachbarte Zylinder (23) ist dabei tief und knapp über der Oberseite des Maschinenbetts (12) angeordnet.

Die Zylinder (23,24) sind vorzugsweise als hydraulische Zylinder ausgebildet. Sie weisen jeweils eine ausfahrbare Kolbenstange (26) und ein Zylindergehäuse (25) auf. Die Zylindergehäuse (25) sind bevorzugt am Maschinenkopf (13) montiert und abgestützt. Die freien Enden der Kolbenstangen (26) sind am Stauchkopf (27) befestigt. Bei anderen Antriebseinheiten können das Antriebsgehäuse (25) und das ausfahrbare Antriebselement (26), z.B. eine Zahnstange oder eine Gewindespindel, entsprechend angeordnet und verbunden sein.

Die Pressschweißvorrichtung (1), insbesondere die Reibeinrichtung (9), weist in den gezeigten Ausführungsbeispielen am Maschinenkopf (13,14) jeweils eine drehbare Welle (54), die nachfolgend als Spindel bezeichnet wird, eine frontseitig an der Spindel (54) angeordnete Bauteilaufnahme (34,35), einen Spindelstock und einen Spindelantrieb (56) auf. Der Spindelstock (53) beinhaltet die Lagerung, Führung und Abstützung der Spindel (54) und ist am Maschinenkopf (13,14) angeordnet und abgestützt. Zwischen der Bauteilaufnahme (34,35) und dem Spindelantrieb (56) befindet sich ein Antriebsstrang (57), der sich längs der Maschinenachse (6) erstreckt und mit dieser vorzugsweise fluchtet.

Der Maschinenkopf (13,14) und der zugehörige Spindelantrieb (56) können getrennt voneinander angeordnet und jeweils eigenständig am Maschinengestell (12) gelagert sein. Sie sind in Richtung der Maschinenachse (6) mit Abstand hintereinander angeordnet. Zwischen dem Maschinenkopf (13,14) und dem zugehörige Spindelantrieb (56) kann eine steuerbare Massenentkopplung (79) angeordnet sein.

Eine solche Anordnung kann auch bei der vorgenannten Variante der Plastifizierungseinrichtung (7) mit einer Lichtbogeneinrichtung vorhanden sein.

Der Spindelantrieb (56) ist in der gezeigten Ausführungsform als Direktantrieb ausgebildet. Er weist einen Antriebsmotor (58) auf, dessen Motorwelle (59) im Wesentlichen fluchtend zur Längsachse der Spindel (54) und zur Maschinenachse (6) ausgerichtet ist. Die Motorwelle (59) ist über eine Kupplung (62) mit der Spindel (54) oder einer nachfolgend erläuterten Betätigungseinrichtung (41) für die Bauteilaufnahme (34) gekoppelt. Die Kupplung (62) ist drehfest und biegelastisch ausgebildet. Sie kann evtl. Fluchtungsfehler, insbesondere Seitenversatz und/oder Schrägstellung, ausgleichen. Ferner kann im Antriebsstrang (57) eine steuerbare Bremse (nicht dargestellt) befinden.

Alternativ kann der Antriebsmotor seitlich versetzt von der Spindel (54) sowie der Maschinenachse (6) angeordnet sein und über ein Vorgelege, insbesondere einen Riementrieb, die Spindel (54) antreiben.

In einer weiteren Abwandlung kann der Spindelantrieb (56) eine Schwungscheibenanordnung (nicht dargestellt) aufweisen. Die Schwungscheiben werden vom Antriebsmotor (58) in Rotation um die Maschinenachse (6) versetzt und bewirken dann einen Trägheitsantrieb für die Spindel (54), wobei eine steuerbare Bremse die Drehzahl im Antriebsstrang (57) steuern oder regeln und ggf. die Drehung auch stillsetzen kann. Mittels einer Kupplung kann die Schwungscheibenanordnung vom Antriebsmotor (58) und ggf. von der Spindel (54) getrennt werden.

Der Spindelantrieb (56) ist in den gezeigten Ausführungsbespielen auf einem schlittenartigen Antriebsträger (60) angeordnet und axial verfahrbar am Maschinengestell (12) gelagert. Er kann dabei auf der gleichen Führung (32) wie der zugehörige Maschinenkopf (13,14) gelagert und geführt sein. Der Spindelantrieb (56) kann ferner eine steuerbare Antriebsfixierung (84) aufweisen, mit der er bedarfsweise und temporär am Maschinenbett (12) fixiert werden kann. Wenn eine Schwungscheibenanordnung vorhanden ist, kann diese ebenfalls auf dem Antriebsträger (60) angeordnet sein.

In einer nicht dargestellten Variante kann der Spindelantrieb (56) stationär am Maschinengestell (12) angeordnet sein. Auch eine evtl. Schwungscheibenanordnung ist in diesem Fall stationär.

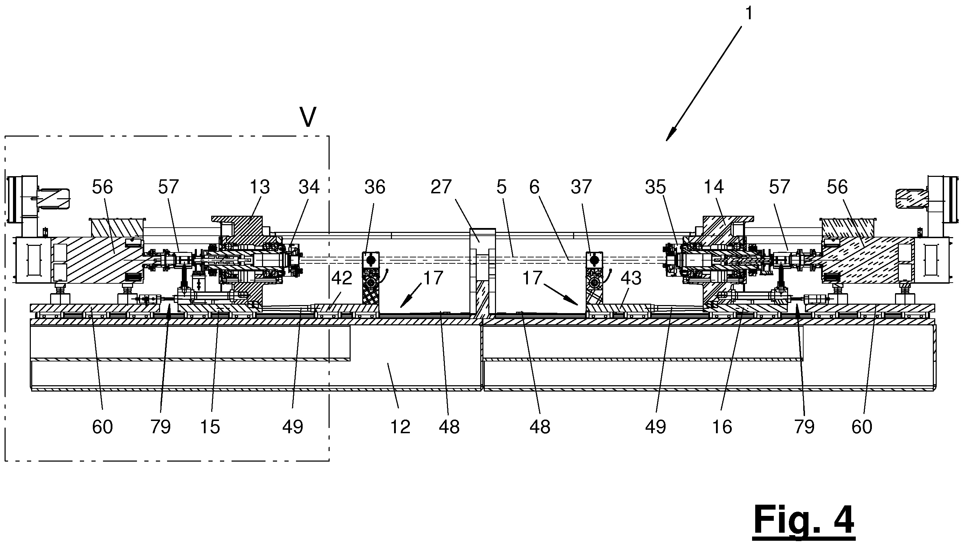

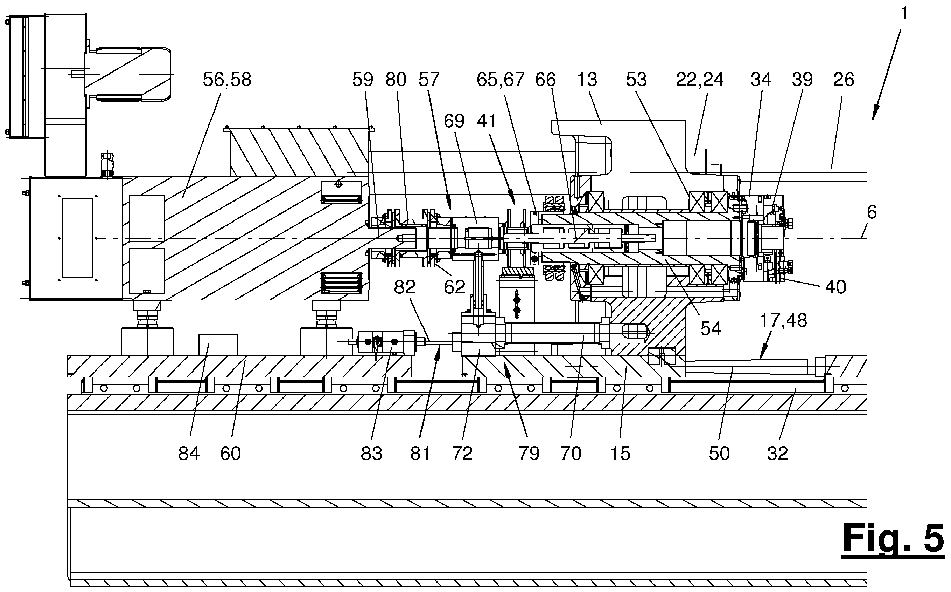

Die steuerbare Massenentkopplung (79) kann den vom Stauchantrieb (22) bewegten Maschinenkopf (13,14) bei seinem axialen Vorschub längs der Maschinenachse (6) bedarfsweise mit dem Spindelantrieb (56) koppeln oder entkoppeln. Im Kopplungszustand wird die Masse des Spindelantriebs (56) und seines Antriebsträgers (60) sowie ggf. der Schwungscheibenanordnung und weiterer Komponenten beim Vorschub, insbesondere Zustellhub, mitbewegt. Im Entkopplungszustand, insbesondere beim Prozesshub, geschieht diese Mitnahme nicht. Die Kopplung erfolgt bevorzugt mechanisch. Die Massenentkopplung (79) kann eine axialtolerante Kupplung (80) im Antriebsstrang (57) aufweisen. Ferner kann sie eine lösbare und steuerbare Koppeleinrichtung (81) zwischen dem Spindelantrieb (56) und dem Maschinenkopf (13,14), insbesondere zwischen deren Trägern (15,16,60) aufweisen. Die Massenentkopplung (79) kann über die besagte Maschinensteuerung gesteuert werden. Die Pressschweißvorrichtung (1) weist die besagte Betätigungseinrichtung (41) für die Bauteilaufnahme (34,35) am Maschinenkopf (13,14) auf. Sie wirkt bevorzugt auf das oder die Spannelement(e) (40). Die Betätigungseinrichtung (41) weist einen Betätigungsantrieb (65) auf, der zwischen dem Spindelantrieb (56) und der Spindel (54) im Antriebsstrang (57) angeordnet ist. Der Betätigungsantrieb (65) ist dabei vorzugsweise mitdrehend im Antriebsstrang (57) angeordnet. Figur 4 und 5 verdeutlichen diese Anordnung. Hierbei kann der Spindelantrieb (56), insbesondere der Antriebsmotor (58) als Direktantrieb fluchtend zur Maschinen- und Spindelachse (6) ausgerichtet sein, was Vorteile hinsichtlich der freien Motorwahl und der dadurch gegebenen Wirtschaftlichkeit mit sich bringt.

Die Betätigungseinrichtung (41) weist einen Betätigungsantrieb (65) mit einem in Figur 5 gezeigten Betätigungselement (66) auf, welches durch den Innenraum der hohlen Spindel (54) geführt ist und z.B. durch eine Axialbewegung auf die Stellmittel der Spannelemente (40) einwirkt. Der z.B. hydraulische oder elektrische Betätigungsantrieb (65) besitzt ein mantelförmiges Antriebsgehäuse (67), welches einerseits mit der Motorwelle (59) und andererseits mit dem Mantel der hohlen Spindel (54) drehfest verbunden ist und das Antriebsmoment des Spindelantriebs (65) verformungs- und verlustfrei überträgt.

Die Betätigungseinrichtung (41) weist ferner eine Drehzuführung (69) für Betriebsmittel, z.B. Hydraulikflüssigkeit oder elektrischen Strom, von außen zu dem mit der Spindel (54) drehenden Betätigungsantrieb (65) auf. Hierzu ist ein Anschluss für einen nicht dargestellten Schlauch oder ein Kabel an einem stationären Zuführgehäuse der Drehzuführung (69) angeordnet. Ferner sind externe Leitungen (70) für eine Leckölabfuhr sowie ein Anschlusskopf (72) vorgesehen, der zugleich eine Stützfunktion für die Drehzuführung (69) haben kann. Im Innenraum oder im Mantel der Spindel (54) können interne Leitungen zu den ggf. in der Spindel (54) angeordneten Abtriebselementen (66), z.B. einer Kolbenanordnung, verlegt sein.

Die Betätigungseinrichtung (41) ist leichtgewichtig und baut kompakt. Sie ist auf dem Träger (15,16) des zugehörigen Maschinenkopfs (13,14) angeordnet und wird zusammen mit diesem bewegt.

Im Antriebsstrang (57) zwischen dem Spindelantrieb (56) und der Spindel (54) kann eine Messeinrichtung (nicht dargestellt) mit einer Messwelle für die Erfassung des Antriebsmoments und ggf. der Antriebsdrehzahl angeordnet ist. Die Messeinrichtung kann zwischen die Motorwelle (59) und die Spindel (54) bzw. die Betätigungseinrichtung (41) geschaltet sein. Die Antriebs- oder Motorwelle (59) kann geteilt ausgebildet sein, wobei die Messwelle zwischen die Wellenhälften eingesetzt ist. Alternativ kann die Antriebs- oder Motorwelle (59) mit geeigneten Messelementen versehen sein und die Messwelle (76) bilden.

Die Pressschweißvorrichtung (1) kann gemäß Figur 1 eine dem Maschinenkopf (13,14) und/oder der weiteren Bauteilaufnahme (36,37) zugeordnete Bearbeitungseinrichtung (18) für die Bearbeitung des Schweißteils (5,5') nach dem Schweißprozess aufweisen. Die Bearbeitungseinrichtung (18) kann ggf. auch für eine Bearbeitung von ein oder mehreren noch zu verbindenden Bauteilen (2,3,3',4) benutzt werden. Die Bearbeitungseinrichtung (18) ist z.B. als Abtrenneinrichtung, insbesondere als Abdreheinrichtung, oder als Stanze für den Schweißwulst ausgebildet. Sie kann auch bei der Variante von Figur 6 und 7 eingesetzt werden. Die Pressschweißvorrichtung (1) weist ferner eine Stelleinrichtung (17) auf, mit der eine Relativbewegung zwischen dem Maschinenkopf (13,14) und der zugeordneten weiteren Bauteilaufnahme (36,37) erzeugt wird. Diese Relativbewegung und die damit einher gehende Abstandsänderung zwischen dem Maschinenkopf (13,14) und der Bauteilaufnahme (36,37) kann für die Bearbeitung des Schweißteils (5,5') oder ggf. eines Bauteils (2,3,3',4) benutzt werden. Die Stelleinrichtung (17) kann mehrfach vorhanden sein.

Die Stelleinrichtung (17) kann in unterschiedlicher Weise ausgebildet und angeordnet sein. Bei den Varianten von Figur 1 und 6 sind zwei Stelleinrichtungen (17) vorhanden, wobei den zentralen Bauteilaufnahmen (36,37) jeweils eine Stelleinrichtung (17) zugeordnet ist. Die einzelne Einkopfmaschine hat nur eine Stelleinrichtung (17).

Die Stelleinrichtung (17) kann auf unterschiedliche Weise wirken. Sie kann einerseits die vorbeschriebene Relativbewegung und Abstandsänderung für die Bearbeitung bewirken. Sie kann andererseits für eine Längeneinstellung auf unterschiedliche Bauteile (2,3,3',4) mit differierenden Bauteillängen dienen. Sie kann eine Kompensation von Einlegefehlern, Bauteiltoleranzen oder auch Bauteilelastizitäten im Schweißprozess bewirken.

Die Stelleinrichtung (17) weist eine steuerbare und längenveränderliche Koppeleinrichtung (48,49) auf. Diese kann auch mehrfach vorhanden sein.

In den gezeigten Varianten von Figur 1 und 6 befindet sich eine Koppeleinrichtung (48) zwischen der zentralen Bauteilaufnahme (36,37) und dem Stauch- oder Stützkopf (27). Sie bewirkt die Relativbewegung und Abstandsänderung für die Bearbeitung. Sie treibt dabei die Bauteilaufnahme (36,37) an und bewegt sie relativ zum Stauch- oder Stützkopf (27), an dem sie sich andererseits gestellfest abstützt.

Ferner ist eine Koppeleinrichtung (49) zwischen dem Maschinenkopf (13,14) und der zugeordneten weiteren Bauteilaufnahme (36,37) angeordnet. Sie treibt und bewegt die Bauteilaufnahme (36,37), wobei sie sich am Maschinenkopf (13,14) abstützt. Diese Koppeleinrichtung (49) dient der Kompensation von Einlegefehlern, Bauteiltoleranzen oder auch Bauteilelastizitäten im Schweißprozess.

Die Koppeleinrichtungen (48,49) können gleichartig ausgebildet sein. Sie sorgen für eine Verbindung der Komponenten (13,14,27,36,37) in Richtung der Maschinenachse (6) und sind vorzugsweise mit deren jeweiligen Trägern (15,16,42,43) verbunden.

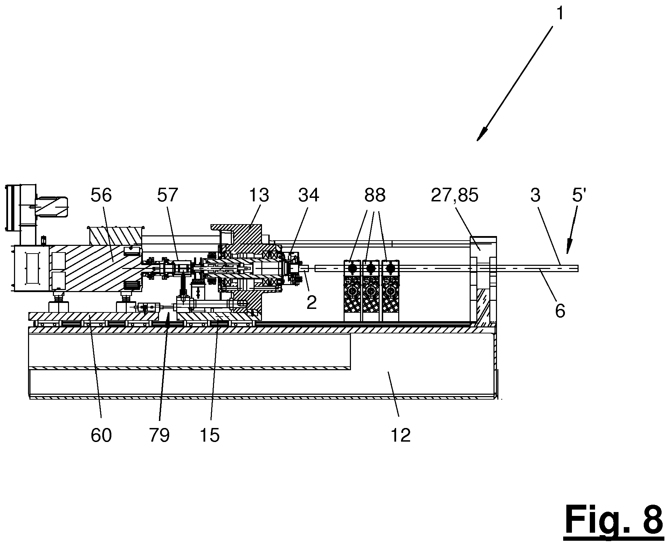

In der schematisch dargestellten Variante von Figur 8 weist die Pressschweißvorrichtung (1) mehrere, z.B. zwei, drei oder mehr, zentrale Bauteilaufnahmen (88) auf, die gemeinsam das Bauteil (3) radial und axial fixieren sowie den Stauchdruck aufnehmen. Die Bauteilaufnahmen (88) können stationär am Maschinengestell (12) angeordnet und abgestützt sein. Sie können den Stauchanschlag (28) ersetzen, wobei der Maschinenkopf (13,14) axial verfahrbar am Maschinengestell (12) angeordnet ist. Der Stützkopf (27) kann den erwähnten Durchlass (85) für ein sehr langes Bauteil (3) aufweisen. Eine Einkopfmaschine mit dieser Ausgestaltung hat einen erweiterten Einsatzbereich und kann auch für überlange Bauteile (3) benutzt werden. Ein Einsatz solcher Bauteilaufnahmen (88) ist auch bei einer Doppelkopfmaschine möglich.

Abwandlungen der gezeigten und beschriebenen Ausführungsbeispiele sind in verschiedener Weise möglich. Insbesondere können die Merkmale der verschiedenen Ausführungsbeispiele beliebig miteinander kombiniert und auch ausgetauscht werden. Der Stauchantrieb (22) kann in konventioneller Weise, z.B. gemäß des eingangs genannten Standes der Technik, ausgeführt sein. Er kann außenseitig an einem Maschinenkopf (13,14) angreifen und Druckkräfte entwickeln. Die Stelleinrichtung (17) kann nur eine Koppeleinrichtung (48,49) zur besagten Relativbewegung für die Bearbeitung oder eine vertauschte Anordnung von Koppeleinrichtungen (48,49) aufweisen. Eine einzelne Koppeleinrichtung kann außerdem bei entsprechender Ausbildung alle genannten Stellfunktionen übernehmen.

### BEZUGSZEICHENLISTE

- 1: Pressschweißvorrichtung, Reibschweißvorrichtung
- 2: Bauteil
- 3: Bauteil
- 3': Bauteil
- 4: Bauteil
- 5: Schweißteil
- 5': Schweißteil
- 6: Längsachse, Maschinenachse
- 7: Plastifiziereinrichtung
- 8: Staucheinrichtung
- 9: Reibeinrichtung
- 10:
- 11: Halterung für Bauteile
- 12: Maschinengestell, Maschinenbett
- 13: Maschinenkopf
- 14: Maschinenkopf
- 15: Träger, Schlitten
- 16: Träger, Schlitten
- 17: Stelleinrichtung
- 18: Bearbeitungseinrichtung, Abdreheinrichtung
- 19: Betriebsmittelversorgung
- 20: Bedienbereich
- 21:
- 22: Stauchantrieb
- 23: Zylinder
- 24: Zylinder
- 25: Zylindergehäuse
- 26: Kolbenstange
- 27: Stauchkopf, Joch, Stützkopf
- 28: Stauchanschlag
- 29:
- 30:
- 31:
- 32: Führung
- 33:
- 34: Bauteilaufnahme an Maschinenkopf
- 35: Bauteilaufnahme an Maschinenkopf
- 36: Bauteilaufnahme, Zentralaufnahme
- 37: Bauteilaufnahme, Zentralaufnahme
- 38:
- 39: Spanneinrichtung, Spannfutter
- 40: Spannelement
- 41: Betätigungseinrichtung für Bauteilaufnahme
- 42: Träger, Schlitten
- 43: Träger, Schlitten
- 44:
- 45:
- 46: Fixiereinrichtung
- 47:
- 48: Koppeleinrichtung für Zentralaufnahme/Stauchkopf
- 49: Koppeleinrichtung für Zentralaufnahme/Maschinenkopf
- 50:
- 51:
- 52:
- 53: Spindelstock
- 54: Spindel
- 55:
- 56: Reibantrieb, Spindelantrieb
- 57: Antriebsstrang
- 58: Antriebsmotor, Direktantrieb
- 59: Welle, Motorwelle
- 60: Antriebsträger, Schlitten
- 61:
- 62: Kupplung, Drehkupplung
- 63:
- 64:
- 65: Betätigungsantrieb, Zylinder
- 66: Abtriebselement, Kolben, Spindel
- 67: Antriebsgehäuse
- 68:
- 69: Drehzuführung Betriebsmittel
- 70: Leitung, extern
- 71:
- 72: Anschlusskopf
- 73:
- 74:
- 75:
- 76:
- 77:
- 78:
- 79: Massenentkopplung
- 80: Kupplung in Antriebsstrang
- 81: Koppeleinrichtung
- 82:
- 83:
- 84:
- 85: Durchlass
- 86: Einsatz, Stauchabstützung
- 87: Schott
- 88: Bauteilaufnahme, stationär

## Patentansprüche

1. Pressschweißvorrichtung mit einer Plastifizierungseinrichtung (7) und einer Staucheinrichtung (8) sowie Bauteilaufnahmen (34,35,36,37) für die zu verschweißenden Bauteile (2,3,3',4) und einem Maschinengestell (12), wobei die Pressschweißvorrichtung (1) mehrere Maschinenköpfe (13,14) mit jeweils einer Bauteilaufnahme (34,35) aufweist, die beweglich am Maschinengestell (12) angeordnet und mit einem eigenen Stauchantrieb (22) verbunden sind, wobei die Maschinenköpfe (13,14) und ihre Stauchantriebe (22) eigenständig steuerbar sind, wobei zwischen den Maschinenköpfen (13,14) ein bevorzugt gestellfester Stauchkopf oder Stützkopf (27) angeordnet ist, wobei der zentrale Stauch- oder Stützkopf (27) beidseits einen Stauchanschlag (28) *oder* einen offenen Durchlass (85) für ein zentrales Bauteil (3) aufweist, und wobei der zentrale Stauch- oder Stützkopf (27) für einen Wechsel zwischen einem offenen Durchlass (85) oder einem Stauchanschlag (28) umrüstbar oder austauschbar ist.

2. Pressschweißvorrichtung nach Anspruch 1, **dadurch gekennzeichnet, dass** zwischen dem Stauch- oder Stützkopf (27) und dem jeweiligen Maschinenkopf (13,14) eine weitere Bauteilaufnahme (36,37) beweglich am Maschinengestell (12) gelagert ist oder zwischen dem Maschinenkopf (13,14) und dem Stützkopf (27) mehrere weitere Bauteilaufnahmen (88) stationär am Maschinengestell (12) angeordnet sind.

3. Pressschweißvorrichtung nach einem der vorhergehenden Ansprüche, **dadurch gekennzeichnet, dass** der Stauch- oder Stützkopf (27) rahmen- oder bügelförmig ausgebildet ist und einen zentralen Durchlass (85) mit einem daran lösbar angeordneten Einsatz (86) mit den Stauchanschlägen (28) aufweist.

4. Pressschweißvorrichtung nach einem der vorhergehenden Ansprüche, **dadurch gekennzeichnet, dass** die Pressschweißvorrichtung (1) mit den Stauchanschlägen (28) als doppelte Einkopfmaschine und mit dem offenen Durchlass (85) als Doppelkopfmaschine betreibbar ist.

5. Pressschweißvorrichtung nach einem der vorhergehenden Ansprüche, **dadurch gekennzeichnet, dass** der jeweilige Stauchantrieb (22) zwischen dem endseitigen Maschinenkopf (13,14) und dem zentralen Stauch- oder Stützkopf (27) angeordnet ist, wobei bevorzugt die Stauchantriebe (22) mit dem Stauch- oder Stützkopf (27) und ihrem jeweiligen Maschinenkopf (13,14) verbunden sind und auf Zug wirken.

6. Pressschweißvorrichtung nach einem der vorhergehenden Ansprüche, **dadurch gekennzeichnet, dass** der Stauchantrieb (22) zwei oder mehr parallele Antriebseinheiten (23,24), vorzugsweise Zylinder, aufweist, die längs und beidseitig neben der Maschinenachse (6) angeordnet sind, wobei bevorzugt die Zylinder (23,24) der Stauchantriebe (22) jeweils in unterschiedlichen Höhen über dem Maschinengestell (12) angeordnet sind, wobei der dem Bedienbereich (20) der Pressschweißvorrichtung (1) benachbarte Zylinder (23) tiefer als ein jenseitiger anderer Zylinder (24) angeordnet ist.

7. Pressschweißvorrichtung nach einem der vorhergehenden Ansprüche, **dadurch gekennzeichnet, dass** dem Maschinenkopf (13,14) eine drehbare Spindel (54) mit der Bauteilaufnahme (34), ein Spindelstock (53) und ein Spindelantrieb (56) zugeordnet sind, wobei der Maschinenkopf (13,14) und der Spindelantrieb (56) getrennt voneinander am Maschinengestell (12) angeordnet sind, wobei zwischen dem starr oder beweglich am Maschinengestell (12) angeordneten Spindelantrieb (56) und dem Maschinenkopf (13,14) eine steuerbare Massenentkopplung (79) angeordnet ist.

8. Pressschweißvorrichtung nach einem der vorhergehenden Ansprüche, **dadurch gekennzeichnet, dass** die Pressschweißvorrichtung (1) eine im Antriebsstrang (57) zwischen Spindelantrieb (56) und Spindel (54) angeordnete Messeinrichtung mit einer Messwelle für die Erfassung des Antriebsmoments und ggf. der Antriebsdrehzahl aufweist.

9. Pressschweißvorrichtung nach einem der vorhergehenden Ansprüche, **dadurch gekennzeichnet, dass** die Pressschweißvorrichtung (1) als Reibschweißvorrichtung ausgebildet ist, wobei die Plastifizierungseinrichtung (7) eine Reibeinrichtung (9) aufweist oder die Pressschweißvorrichtung (1) als Schweißvorrichtung mit einem magnetisch bewegten Lichtbogen ausgebildet ist, wobei die Plastifizierungseinrichtung (7) eine Lichtbogeneinrichtung aufweist.

10. Verfahren zum Pressschweißen von Bauteilen (2,3,3',4) mittels einer Pressschweißvorrichtung (1), welche eine Plastifizierungseinrichtung (7) und eine Staucheinrichtung (8) sowie Bauteilaufnahmen (34,35,36,37) für die zu verschweißenden Bauteile (2,3,3',4) und ein Maschinengestell (12) sowie mehrere Maschinenköpfe (13,14) mit jeweils einer Bauteilaufnahme (34,35) aufweist, die beweglich am Maschinengestell (12) angeordnet und mit einem eigenen Stauchantrieb (22) verbunden sind, wobei die Maschinenköpfe (13,14) und ihre Stauchantriebe (22) eigenständig gesteuert werden, wobei zwischen den Maschinenköpfen (13,14) ein bevorzugt gestellfester Stauchkopf oder Stützkopf (27) angeordnet ist, wobei der zentrale Stauch- oder Stützkopf (27) beidseits einen Stauchanschlag (28) *oder* einen offenen Durchlass (85) für ein zentrales Bauteil (3) aufweist, und wobei der zentrale Stauch- oder Stützkopf (27) für einen Wechsel zwischen einem offenen Durchlass (85) oder einem Stauchanschlag (28) umgerüstet oder ausgetauscht wird.

11. Verfahren nach Anspruch 10, **dadurch gekennzeichnet, dass** wahlweise ein Einzelbetrieb oder ein Parallelbetrieb von Pressschweißprozessen durchgeführt wird, wobei insbesondere die Pressschweißvorrichtung (1) wahlweise als doppelte Einkopfmaschine oder als Doppelkopfmaschine oder im Einkopfbetrieb betrieben wird.

12. Verfahren nach Anspruch 10 oder 11, **dadurch gekennzeichnet, dass** ein einzelner Pressschweißprozess für ein einzelnes Schweißteil (5) oder mehrere separate Pressschweißprozesse parallel und dabei zeitgleich oder zeitversetzt zur Bildung von zwei oder mehr Schweißteilen (5,4') durchgeführt werden.

13. Verfahren nach Anspruch 10, 11 oder 12, **dadurch gekennzeichnet, dass** mehrere, insbesondere zwei, drei oder mehr, zentrale Bauteilaufnahmen (88) gemeinsam das Bauteil (3) radial und axial fixieren sowie den Stauchdruck aufnehmen.

14. Verfahren nach einem der Ansprüche 10 bis 13, **dadurch gekennzeichnet, dass** mehrere, insbesondere zwei, drei oder mehr, zentrale Bauteilaufnahmen (88) stationär am Maschinengestell (12) angeordnet und abgestützt werden, wobei sie einen Stauchanschlag (28) ersetzen und wobei der Maschinenkopf (13,14) axial am Maschinengestell (12) verfahren wird.

15. Verfahren nach einem der Ansprüche 10 bis 14, **dadurch gekennzeichnet, dass** die zu verschweißenden Bauteile (2,3,3',4) an ihren einander zugekehrten Stirnrändern durch Reibung oder durch einen umlaufend bewegten Lichtbogen plastifiziert werden.

## Claims

1. Pressure welding device with a plastifying unit (7) and a compressing unit (8) and also component mounts (34, 35, 36, 37) for the components (2, 3, 3', 4) to be welded, and a machine frame (12), wherein the pressure welding device (1) has a plurality of machine heads (13, 14) each having a component mount (34, 35) which machine heads are arranged movably on the machine frame (12) and are connected to a dedicated compressing drive (22), wherein the machine heads (13, 14) and the compressing drives (22) thereof are independently controllable, wherein a preferably frame-mounted compressing head or supporting head (27) is arranged between the machine heads (13, 14), wherein the central compressing or supporting head (27) on both sides has a compressing stop (28) or an open passage (85) for a central component (3), and wherein the central compressing or supporting head (27) can be modified or interchanged for changing between an open passage (85) or a compressing stop (28).

2. Pressure welding device according to Claim 1, **characterized in that**, between the compressing or supporting head (27) and the respective machine head (13, 14), a further component mount (36, 37) is mounted movably on the machine frame (12), or, between the machine head (13, 14) and the supporting head (27), a plurality of further component mounts (88) are arranged in a stationary manner on the machine frame (12).

3. Pressure welding device according to either of the preceding claims, **characterized in that** the compressing or supporting head (27) is frame- or bracket-shaped and has a central passage (85) with an insert (86) arranged releasably thereon with the compressing stops (28).

4. Pressure welding device according to one of the preceding claims, **characterized in that** the pressure welding device (1) can be operated with the compressing stops (28) as a double single head machine and with the open passage (85) as a double-headed machine.

5. Pressure welding device according to one of the preceding claims, **characterized in that** the respective compressing drive (22) is arranged between the end-side machine head (13, 14) and the central compressing or supporting head (27), wherein preferably the compressing drives (22) are connected to the compressing or supporting head (27) and to their respective machine head (13, 14) and act under tension.

6. Pressure welding device according to one of the preceding claims, **characterized in that** the compressing drive (22) has two or more parallel drive units (23, 24), preferably cylinders, which are arranged longitudinally and on both sides next to the machine axis (6), wherein preferably the cylinders (23, 24) of the compressing drives (22) are each arranged at different heights above the machine frame (12), wherein the cylinder (23) adjacent to the operating region (20) of the pressure welding device (1) is arranged lower than an opposite, other cylinder (24).

7. Pressure welding device according to one of the preceding claims, **characterized in that** the machine head (13, 14) is assigned a rotatable spindle (54) having the component mount (34), a headstock (53) and a spindle drive (56), wherein the machine head (13, 14) and the spindle drive (56) are arranged separately from each other on the machine frame (12), wherein a controllable mass-decoupling means (79) is arranged between the spindle drive (56), which is arranged rigidly or movably on the machine frame (12), and the machine head (13, 14).

8. Pressure welding device according to one of the preceding claims, **characterized in that** the pressure welding device (1) has a measuring unit, which is arranged in the drive train (57) between the spindle drive (56) and the spindle (54), with a measuring shaft for detecting the driving torque and optionally the rotational driving speed.

9. Pressure welding device according to one of the preceding claims, **characterized in that** the pressure welding device (1) is designed as a friction welding device, wherein the plastifying unit (7) has a friction unit (9) or the pressure welding device (1) is designed as a welding device with a magnetically impelled arc, wherein the plastifying unit (7) has an arcing unit.

10. Method for pressure welding of components (2, 3, 3', 4) by means of a pressure welding device (1) which has a plastifying unit (7) and a compressing unit (8) and also component mounts (34, 35, 36, 37) for the components (2, 3, 3', 4) to be welded, and a machine frame (12), and has a plurality of machine heads (13, 14) each having a component mount (34, 35) which machine heads are arranged movably on the machine frame (12) and are connected to a dedicated compressing drive (22), wherein the machine heads (13, 14) and the compressing drives (22) thereof are independently controllable, wherein a preferably frame-mounted compressing head or supporting head (27) is arranged between the machine heads (13, 14), wherein the central compressing or supporting head (27) on both sides has a compressing stop (28) or an open passage (85) for a central component (3), and wherein the central compressing or supporting head (27) can be modified or interchanged for changing between an open passage (85) or a compressing stop (28).

11. Method according to Claim 10, **characterized in that** either an individual operation or a parallel operation of pressure welding processes is carried out, wherein in particular the pressure welding device (1) is operated either as a double single head machine or as a double-headed machine or in the single head mode.

12. Method according to Claim 10 or 11, **characterized in that** an individual pressure welding process is carried out for an individual weld part (5) or a plurality of separate pressure welding processes are carried out in parallel and at the same time or offset in time in order to form two or more weld parts (5, 4').

13. Method according to Claim 10, 11 or 12, **characterized in that** more than one, in particular two, three or more, central component mounts (88) together secure the component (3) radially and axially and absorb the compressing pressure.

14. Method according to one of Claims 10 to 13, **characterized in that** more than one, in particular two, three or more, central component mounts (88) are arranged and supported in a stationary manner on the machine frame (12), wherein said component mounts replace a compressing stop (28) and wherein the machine head (13, 14) is moved axially on the machine frame (12).

15. Method according to one of Claims 10 to 14, **characterized in that** the mutually facing end edges of the components (2, 3, 3', 4) to be welded are plastified by friction or by a revolving impelled arc.

## Revendications

1. Dispositif de soudage par pression comprenant un dispositif de plastification (7) et un dispositif de refoulement (8) ainsi que des logements de pièce (34, 35, 36, 37) pour les pièces à souder (2, 3, 3', 4) et un bâti de machine (12), dans lequel le dispositif de soudage par pression (1) comprend plusieurs têtes de machine (13, 14) dotées respectivement d'un logement de pièce (34, 35), lesquelles sont disposées de manière mobile sur le bâti de machine (12) et sont reliées à un entraînement de refoulement (22) propre, dans lequel les têtes de machine (13, 14) et leurs entraînements de refoulement (22) peuvent être commandés individuellement, dans lequel une tête de refoulement ou tête de support (27) de préférence solidaire du bâti est disposée entre les têtes de machine (13, 14), dans lequel la tête de refoulement ou de support centrale (27) comprend, des deux côtés, une butée de refoulement (28) ou un passage ouvert (85) pour une pièce centrale (3), et dans lequel la tête de refoulement ou de support centrale (27) peut être transformée ou remplacée pour un échange entre un passage ouvert (85) ou une butée de refoulement (28).

2. Dispositif de soudage par pression selon la revendication 1, **caractérisé en ce qu'**un autre logement de pièce (36, 37) est monté de manière mobile sur le bâti de machine (12) entre la tête de refoulement ou de support (27) et la tête de machine (13, 14) respective ou plusieurs autres logement de pièce (88) sont disposés de manière fixe sur le bâti de machine (12) entre la tête de machine (13, 14) et la tête de support (27) .

3. Dispositif de soudage par pression selon l'une des revendications précédentes, **caractérisé en ce que** la tête de refoulement ou de support (27) est réalisée en forme de cadre ou d'étrier et comprend un passage central (85) doté d'un insert (86) disposé de manière amovible dans celui-ci et doté des butées de refoulement (28).

4. Dispositif de soudage par pression selon l'une des revendications précédentes, **caractérisé en ce que** le dispositif de soudage par pression (1) peut fonctionner avec les butées de refoulement (28) en tant que machine double à une tête et avec le passage ouvert (85) en tant que machine à double tête.

5. Dispositif de soudage par pression selon l'une des revendications précédentes, **caractérisé en ce que** l'entraînement de refoulement (22) respectif est disposé entre la tête de machine (13, 14) côté extrémité et la tête de refoulement ou de support centrale (27), les entraînements de refoulement (22) étant de préférence reliés à la tête de refoulement ou de support (27) et à leur tête de machine (13, 14) respective et agissant en traction.

6. Dispositif de soudage par pression selon l'une des revendications précédentes, **caractérisé en ce que** l'entraînement de refoulement (22) comprend deux ou plus de deux unités d'entraînement parallèles (23, 24), de préférence des cylindres, qui sont disposés longitudinalement et de chaque côté près de l'axe de machine (6), les cylindres (23, 24) des entraînements de refoulement (22) étant de préférence disposés respectivement à différentes hauteurs au-dessus du bâti de machine (12), le cylindre (23) adjacent à la zone de commande (20) du dispositif de soudage par pression (1) étant disposé plus bas qu'un autre cylindre (24) au-delà.

7. Dispositif de soudage par pression selon l'une des revendications précédentes, **caractérisé en ce qu'**une broche rotative (54) dotée du logement de pièce (34), une poupée (53) et un entraînement de broche (56) sont associés à la tête de machine (13, 14), la tête de machine (13, 14) et l'entraînement de broche (56) étant disposés séparément l'un de l'autre sur le bâti de machine (12), un dispositif de découplage de masse (79) pouvant être commandé étant disposé entre l'entraînement de broche (56) disposé de manière rigide ou mobile sur le bâti de machine (12) et la tête de machine (13, 14).

8. Dispositif de soudage par pression selon l'une des revendications précédentes, **caractérisé en ce que** le dispositif de soudage par pression (1) comprend un dispositif de mesure disposé dans la chaîne cinématique (57) entre l'entraînement de broche (56) et la broche (54) et doté d'un arbre de mesure servant à la détection du couple d'entraînement et éventuellement de la vitesse de rotation d'entraînement.

9. Dispositif de soudage par pression selon l'une des revendications précédentes, **caractérisé en ce que** le dispositif de soudage par pression (1) est réalisé sous forme de dispositif de soudage par friction, le dispositif de plastification (7) comprenant un dispositif de friction (9) ou le dispositif de soudage par pression (1) étant réalisé sous forme de dispositif de soudage présentant un arc électrique déplacé magnétiquement, le dispositif de plastification (7) comprenant un dispositif d'arc électrique.

10. Procédé de soudage par pression de pièces (2, 3, 3', 4) au moyen d'un dispositif de soudage par pression (1), lequel comprend un dispositif de plastification (7) et un dispositif de refoulement (8) ainsi que des logements de pièce (34, 35, 36, 37) pour les pièces à souder (2, 3, 3', 4) et un bâti de machine (12) ainsi que plusieurs têtes de machine (13, 14) dotées respectivement d'un logement de pièce (34, 35), lesquelles sont disposées de manière mobile sur le bâti de machine (12) et sont reliées à un entraînement de refoulement (22) propre, dans lequel les têtes de machine (13, 14) et leurs entraînements de refoulement (22) sont commandés individuellement, dans lequel une tête de refoulement ou tête de support (27) de préférence solidaire du bâti est disposée entre les têtes de machine (13, 14), dans lequel la tête de refoulement ou de support centrale (27) comprend, des deux côtés, une butée de refoulement (28) ou un passage ouvert (85) pour une pièce centrale (3), et dans lequel la tête de refoulement ou de support centrale (27) est transformée ou remplacée pour un échange entre un passage ouvert (85) ou une butée de refoulement (28).

11. Procédé selon la revendication 10, **caractérisé en ce qu'**un fonctionnement individuel ou un fonctionnement en parallèle de processus de soudage par pression est effectué sélectivement, le dispositif de soudage par pression (1) fonctionnant en particulier sélectivement en tant que double machine à une tête ou en tant que machine à double tête ou suivant un fonctionnement à une tête.

12. Procédé selon la revendication 10 ou 11, **caractérisé en ce qu'**un processus de soudage par pression individuel pour une pièce soudée individuelle (5) ou plusieurs processus de soudage par pression séparés sont effectués en parallèle et simultanément ou de manière décalée dans le temps pour la formation de deux ou plus de deux pièces soudées (5, 4').

13. Procédé selon la revendication 10, 11 ou 12, **caractérisé en ce que** plusieurs, en particulier deux, trois ou plus de trois logements de pièce centraux (88) fixent conjointement la pièce (3) radialement et axialement et absorbent la pression de refoulement.

14. Procédé selon l'une des revendications 10 à 13, **caractérisé en ce que** plusieurs, en particulier deux, trois ou plus de trois logements de pièce centraux (88) sont disposés et supportés de manière fixe sur le bâti de machine (12), ces logements remplaçant une butée de refoulement (28), et la tête de machine (13, 14) étant déplacée axialement sur le bâti de machine (12).

15. Procédé selon l'une des revendications 10 à 14, **caractérisé en ce que** les pièces à souder (2, 3, 3', 4) sont plastifiées par friction ou par un arc électrique déplacé de manière rotative au niveau de leurs bords frontaux se faisant face.
